# FASCICULE DE BREVET EUROPEEN

(11) **EP 3 545 255 B1**
(45) Date de publication et mention de la délivrance du brevet: **30.12.2020**
(21) Numéro de dépôt: 17801054.2
(22) Date de dépôt: 23.11.2017
(51) Int. Cl.: F41G 3/26

(54) **LUNETTE DE SIMULATION DE TIR**
ABFEUERUNGSIMULATIONSFERNROHR
FIRING SIMULATION SCOPE

(30) Priorité: 24.11.2016 FR 1601663
(43) Date de publication de la demande: 02.10.2019
(73) Titulaire: Airbus Defence and Space SAS, 31402 Toulouse Cedex 4 (FR)
(72) Inventeur: BIRAN, Hervé, 78800 Houilles (FR)
(74) Mandataire: Cabinet Le Guen Maillet
(86) Numéro de dépôt international: PCT/EP2017/080172
(87) Numéro de publication internationale: WO 2018/096023

(56) Documents cités:
- US-A1- 2009 155 747
- US-A1- 2011 207 089
- US-A1- 2016 169 627

## Description

La présente invention concerne une lunette de simulation de tir adaptée à l'entraînement de soldats dans un environnement virtuel.

Pour permettre d'entraîner des soldats sans risques, des systèmes de reconstitution, par environnement virtuel, de cadres opérationnels de champ de bataille ont été développés. On peut par exemple citer le système décrit dans le document de brevet FR 3 007 161 A1.

Les tireurs d'élite requièrent toutefois des conditions de simulation particulières. En effet, les tireurs d'élite sont des soldats qui ont acquis avec l'expérience un grand nombre de réflexes automatiques dans la manipulation de leur fusil. Les systèmes actuels de simulation de cadres opérationnels de champ de bataille utilisent des fusils qui sont dédiés à la simulation, et qui n'ont donc pas le comportement exact du fusil habituellement utilisé par le soldat sur le terrain. Cela fausse les réflexes automatiques acquis par le soldat, et empêche l'immersion complète du soldat dans le scénario de mission reproduit dans l'environnement virtuel.

Il existe des systèmes s'adaptant sur des armes existantes pour s'entraîner au tir sans avoir recours à des balles réelles. US 2011/207089 A1 et US 2009/155747 A1 divulguent des lunettes de simulation. On peut par exemple citer le système SureStrike (marque déposée) de la société Laser Ammo qui comporte une cartouche spéciale reliée à un dispositif de marquage laser à installer à l'embouchure du canon de l'arme. Cette cartouche est installée dans la chambre de l'arme et lorsque le percuteur vient frapper ladite cartouche, un mécanisme active le marquage laser pour permettre au tireur de voir le point d'arrivée qu'aurait eu une balle lors du tir. Ce mécanisme de détection et de visualisation de tir doit être dupliqué pour chaque type d'arme avec lequel le tireur souhaite s'entraîner. Ce mécanisme de détection et de visualisation de tir n'est en outre pas adapté aux tirs longues distances (pas de déviation de tir), ni à l'utilisation dans un environnement virtuel.

Il est souhaitable de pallier ces différents inconvénients de l'état de la technique. Il est ainsi souhaitable de fournir une solution qui permette d'entraîner des tireurs d'élite dans un environnement virtuel, en leur laissant la possibilité d'utiliser leur fusil habituel. Il est en outre souhaitable de fournir une solution qui soit indépendante du type de fusil habituellement utilisé par le tireur d'élite. Il est en outre souhaitable de fournir une solution qui soit simple à implémenter et à faible coût.

L'invention concerne une lunette de simulation de tir destinée à être installée sur un fusil, incluant une première unité de mesure inertielle, un dispositif de réglage de correction de dérive, un système électronique, un microphone, un afficheur et une interface de raccordement à un poste de contrôle. La lunette de simulation de tir étant telle que le système électronique inclut : des moyens pour recevoir, via l'interface de raccordement, des données vidéo représentatives d'un champ de vision, au travers d'une lunette simulée, dans l'environnement virtuel ; des moyens pour afficher sur l'afficheur les données vidéo reçues ; des moyens pour obtenir un enregistrement audio effectué en temps réel par le microphone ; des moyens pour comparer l'enregistrement audio avec une signature prédéterminée de déclenchement de tir avec le fusil ; et des moyens pour transmettre au poste de contrôle via l'interface de raccordement, lorsque l'enregistrement audio coïncide avec la signature prédéterminée, un signal de détection de déclenchement de tir associé avec des mesures inertielles fournies par la première unité de mesure inertielle et avec un premier réglage d'ajustement fourni par le dispositif de réglage de correction de dérive, afin de permettre au poste de contrôle de déterminer une trajectoire de tir dans l'environnement virtuel. Ainsi, grâce au microphone et à la comparaison avec la signature prédéfinie, il est possible de détecter un tir effectué en cours de simulation par le soldat avec son arme habituellement utilisée en opération. La première unité de mesure inertielle permet de facilement, et à moindre coût, détecter l'axe de visée du fusil, même lorsque celui-ci est l'arme habituellement utilisée en opération par le soldat en question.

Selon un mode de réalisation particulier, la lunette de simulation de tir inclut en outre un dispositif de réglage de correction de chute de balle, et le signal de détection de déclenchement de tir est en outre associé avec un second réglage d'ajustement fourni par le dispositif de réglage de correction de chute de balle, afin de permettre au poste de contrôle d'en tenir compte pour déterminer la trajectoire de tir dans l'environnement virtuel. Ainsi, des tirs longues distances (supérieurs à 300 mètres) peuvent être simulés.

Selon un mode de réalisation particulier, la lunette de simulation de tir est telle que le système électronique inclut des moyens pour effectuer un enregistrement audio d'un déclenchement de tir à vide effectué avec le fusil et des moyens pour définir la signature à partir de l'enregistrement audio du déclenchement de tir à vide. Ainsi, il est facile de définir une signature particulièrement adaptée au fusil effectivement utilisé en simulation.

Selon un mode de réalisation particulier, la lunette de simulation de tir est telle que le système électronique inclut des moyens pour effectuer une transposition fréquentielle de l'enregistrement audio, et la signature prédéterminée est une signature spectrale. Ainsi, la comparaison avec la signature est facilitée et performante (faible taux de fausses détections de déclenchement de tir).

Selon un mode de réalisation particulier, la lunette de simulation de tir inclut en outre une seconde unité de mesure inertielle, et le système électronique inclut des moyens pour affiner les mesures inertielles fournies par la première unité de mesure inertielle grâce à des mesures inertielles fournies par la seconde unité de mesure inertielle, la première unité de mesure inertielle étant configurée en mode fusion de données et la seconde unité de mesure inertielle étant configurée en mode données brutes. Ainsi, la détermination de l'axe de visée du fusil est plus fine.

L'invention concerne également un système de simulation incluant au moins un poste de contrôle et au moins une lunette de simulation de tir selon l'un quelconque des modes de réalisation évoqués ci-dessus, chaque lunette de simulation étant raccordée à un dit poste de contrôle, chaque poste de contrôle incluant des moyens pour déterminer la trajectoire de tir dans l'environnement virtuel, lorsque ledit poste de contrôle reçoit le signal de détection de déclenchement de tir en provenance d'une dite lunette de simulation qui lui est raccordée.

Selon un mode de réalisation particulier, chaque poste de contrôle inclut au moins un jeu de tables de tir fournissant, en fonction d'une distance parcourue par une balle simulée, des données de déviation de tir en fonction en outre de la force et de la direction du vent, et les moyens pour déterminer la trajectoire de tir dans l'environnement virtuel incluent : des moyens pour déterminer une position du soldat en simulation dans l'environnement virtuel au moment du déclenchement de tir ; des moyens pour déterminer l'axe de visée du fusil grâce aux mesures inertielles associées avec le signal de détection de déclenchement de tir ; des moyens pour corriger latéralement l'axe de visée du fusil par le premier réglage d'ajustement ; et des moyens pour appliquer les données de déviation précisées dans le jeu de tables de tir. Ainsi, grâce aux tables de tir, la simulation est particulièrement réaliste, les tables de tir pouvant être adaptées en fonction de retours terrain.

Selon un mode de réalisation particulier, chaque jeu de tables de tir fournit, en fonction d'une distance parcourue par une balle simulée, des données de chute de balle, la lunette de simulation comporte un dispositif de réglage de correction de chute de balle, le signal de détection de déclenchement de tir est en outre associé avec un second réglage d'ajustement fourni par le dispositif de réglage de correction de chute de balle, et les moyens pour déterminer la trajectoire de tir dans l'environnement virtuel incluent en outre des moyens pour corriger en élévation l'axe de visée du fusil par le second réglage d'ajustement.

Selon un mode de réalisation particulier, chaque jeu de tables de tir fournit, en fonction d'une distance parcourue par une balle simulée, des données de chute de balle en fonction d'une température ambiante et d'une pression atmosphérique dans l'environnement simulé. Ainsi, pour des tirs longues distances (supérieurs à 300 mètres), la simulation est plus réaliste.

Selon un mode de réalisation particulier, la position du soldat en simulation dans l'environnement virtuel est fixée par application d'un décalage prédéfini par rapport à un avatar d'un observateur accompagnant le soldat en simulation dans l'environnement virtuel. Ainsi, la simulation d'un couple opérationnel tireur-observateur (« sniper-spotter » en anglais) est plus réaliste.

L'invention concerne également un procédé implémenté par une lunette de simulation de tir qui est installée sur un fusil et qui inclut une unité de mesure inertielle, un dispositif de réglage de correction de dérive, un système électronique, un microphone, un afficheur et une interface de raccordement à un poste de contrôle, le procédé étant tel que le système électronique effectue les étapes suivantes : recevoir, via l'interface de raccordement, des données vidéo représentatives d'un champ de vision, au travers d'une lunette simulée, dans l'environnement virtuel ; afficher sur l'afficheur les données vidéo reçues ; obtenir un enregistrement audio effectué en temps réel par le microphone ; comparer l'enregistrement audio avec une signature prédéterminée de déclenchement de tir avec le fusil ; et transmettre au poste de contrôle via l'interface de raccordement, lorsque l'enregistrement audio coïncide avec la signature prédéterminée, un signal de détection de déclenchement de tir associé avec des mesures inertielles fournies par la unité de mesure inertielle et avec un réglage d'ajustement fourni par le dispositif de réglage de correction de dérive, afin de permettre au poste de contrôle de déterminer une trajectoire de tir dans l'environnement virtuel.

L'invention concerne également un procédé implémenté par un système de simulation incluant au moins un poste de contrôle et au moins une lunette de simulation de tir implémentant le procédé mentionné ci-dessus, chaque lunette de simulation étant raccordée à un dit poste de contrôle, le procédé implémenté par le système de simulation étant tel que chaque poste de contrôle détermine la trajectoire de tir dans l'environnement virtuel, lorsque ledit poste de contrôle reçoit le signal de détection de déclenchement de tir en provenance d'une dite lunette de simulation qui lui est raccordée.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un système de simulation dans lequel la présente invention est implémentée ;
- la Fig. 2 illustre schématiquement une lunette de simulation utilisée dans le système de la Fig. 1 ;
- la Fig. 3A illustre schématiquement un exemple d'architecture matérielle d'une carte électronique incluse dans la lunette de simulation ;
- la Fig. 3B illustre schématiquement un exemple d'architecture matérielle d'une carte électronique incluse dans un poste de contrôle du système de la Fig. 1 ;
- la Fig. 4 illustre schématiquement un algorithme d'initialisation d'un mécanisme de détection de déclenchement de tir à vide inclus dans la lunette de simulation et implémenté grâce à la carte électronique incluse dans la lunette de simulation ;
- la Fig. 5 illustre schématiquement un algorithme, implémenté grâce à la carte électronique incluse dans la lunette de simulation, de gestion d'un afficheur inclus dans la lunette de simulation ;
- la Fig. 6 illustre schématiquement un algorithme, implémenté grâce à la carte électronique incluse dans la lunette de simulation, d'implémentation du mécanisme de détection de déclenchement de tir à vide ;
- la Fig. 7A illustre schématiquement un algorithme, implémenté grâce à la carte électronique incluse dans le poste de contrôle, d'implémentation d'un jeu de simulation ;
- la Fig. 7B illustre schématiquement un algorithme, implémenté grâce à la carte électronique incluse dans le poste de contrôle, de définition de données vidéo à fournir à l'afficheur inclus dans la lunette de simulation ;
- la Fig. 7C illustre schématiquement un algorithme, implémenté grâce à la carte électronique incluse dans le poste de contrôle, de vérification d'un tir simulé ;
- la Fig. 8 illustre schématiquement un exemple de rendu d'affichage sur l'afficheur inclus dans la lunette de simulation ; et
- la Fig. 9 illustre schématiquement une table de tir, utilisée par la carte électronique incluse dans le poste de contrôle, pour vérifier un tir simulé.

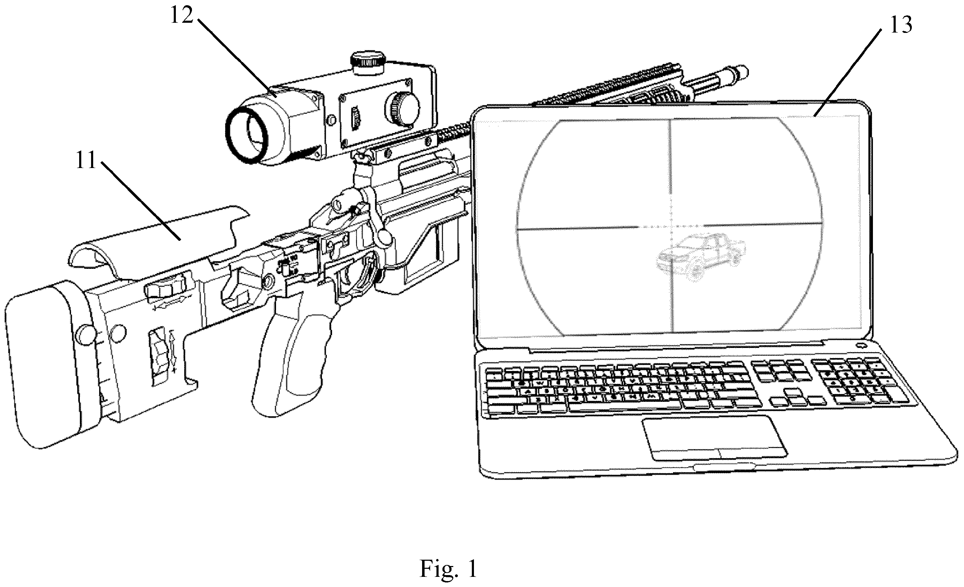

La **Fig. 1** illustre schématiquement un système de simulation dans lequel la présente invention est implémentée. Le système de simulation de la Fig. 1 inclut un poste de contrôle 13, un fusil 11 et une lunette de simulation 12.

Le poste de contrôle 13 implémente un jeu (« game » en anglais) de simulation adapté à l'entraînement de soldats, en reconstituant un environnement propre au champ opérationnel de combat de ces soldats. On parle généralement de «jeu sérieux ».

Le fusil 11 peut être un fusil factice dédié à la simulation.

Le fusil 11 est toutefois préférentiellement l'arme de service, non chargée, du soldat en simulation. Cela permet de mettre le soldat en question dans des conditions de simulation au plus proche de la réalité du terrain. Le fusil 11 est équipé de la lunette de simulation 12. La lunette de simulation 12 vient en remplacement d'une lunette habituellement utilisée par le soldat en opération avec le fusil 11. La lunette de simulation 12 est munie d'un mécanisme de fixation standard 23, par exemple de type rail Picatinny, permettant un montage sur une grande variété de fusils utilisés par les soldats en opération.

Le poste de contrôle 13 est donc configuré pour générer un environnement virtuel, préférentiellement à 360°, avec lequel un soldat en simulation doit interagir pour remplir une mission donnée. Le poste de contrôle 13 inclut préférentiellement un écran et un ou plusieurs périphériques d'entrée (clavier, souris, etc.) pour permettre à un instructeur, en charge de vérifier le déroulement de la simulation, respectivement de suivre ce qui est visualisé par le soldat en simulation via la lunette de simulation 12 et d'entrer des paramètres de simulation afin de définir, voire de modifier, la mission à remplir par le soldat en simulation ou les conditions de ladite mission. Ces paramètres de simulation sont plus particulièrement le type de fusil simulé, le type de lunette simulée, le type des munitions simulées, la température ambiante, la pression atmosphérique, la direction et la force du vent. Ces paramètres ont en effet une influence sur la trajectoire d'un tir au fusil. D'autres paramètres de simulation peuvent aussi être modifiés de la sorte, comme par exemple le scénario de la mission (nombre de cibles, leurs positions respectives à un instant donné dans l'environnement virtuel, leurs mouvements et leur interaction entre elles et le soldat en simulation, etc.). L'architecture matérielle du poste de contrôle 13 repose donc par exemple sur un ordinateur PC (« Personal Computer » en anglais) ou une tablette ou toute autre machine ayant des ressources de traitement permettant de générer ledit environnement virtuel. Le poste de contrôle 13 inclut ainsi un système électronique 350 qui consiste en une ou plusieurs cartes électroniques équipées de composants. Considérons par la suite, de manière non limitative, que le système électronique 350 consiste en une carte électronique.

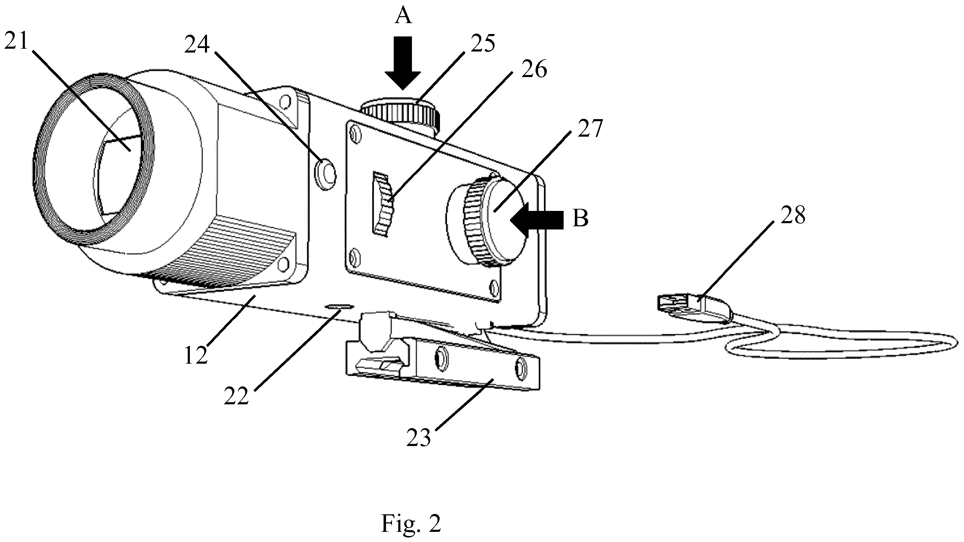

La lunette de simulation 12 permet l'immersion du soldat dans l'environnement virtuel. La lunette de simulation 12 est schématiquement illustrée sur la **Fig. 2****.** Outre le mécanisme de fixation standard 23 susmentionné, la lunette de simulation 12 inclut : un système électronique 300 (non représentée sur la Fig. 2) ; un afficheur 21 ; un microphone 22 ; une diode électroluminescente 24 ; une molette de correction de dérive (« windage » en anglais) 25 ; une molette de définition de grossissement (« zoom » en anglais) 26 ; une molette de correction de chute de balle (« bullet drop » en anglais) 27 ; une unité de mesure inertielle IMU 314 (non représentée sur la Fig. 2) ; et une interface de raccordement 28.

Le système électronique 300 consiste en une ou plusieurs cartes électroniques équipées de composants. Considérons par la suite, de manière non limitative, que le système électronique 300 consiste en une carte électronique.

La carte électronique 300 est adaptée pour transmettre des données vidéo à afficher en temps réel par l'afficheur 21, pour recevoir des enregistrement audio effectués en temps réel par le microphone 22, pour contrôler la diode électroluminescente 24, pour recevoir un réglage de la molette de correction de dérive 25, pour recevoir un réglage de la molette de définition de grossissement 26, pour recevoir un réglage de la molette de chute de balle 27, pour recevoir des mesures inertielles de l'unité de mesure inertielle IMU 314, et pour échanger avec le poste de contrôle 13 via l'interface de raccordement 29. La carte électronique 300 peut utiliser une source d'alimentation autonome de la lunette de simulation 12 ou, en variante, utiliser une source d'alimentation fournie par le poste de contrôle 13 via l'interface de raccordement 28 (en fonction de la technologie utilisée pour réaliser l'interface de raccordement 28).

L'interface de raccordement 28 est ainsi destinée à connecter la lunette de simulation 12 au poste de contrôle 13. L'interface de raccordement 29 est par exemple de type USB (« Universal Serial Bus » en anglais) et / ou de type HDMI (« High Definition Multimedia Interface » en anglais). L'interface de raccordement 28 peut être conforme à une autre technologie de communication filaire, par exemple de type Ethernet, et/ou à une technologie de communication sans-fil, par exemple de type Wi-Fi. L'interface de raccordement 28 doit être adaptée pour permettre au poste de contrôle 23 de transmettre en temps-réel un flux de données vidéo à faire afficher par l'afficheur 21 de la lunette de simulation 12.

La diode électroluminescente 24 est optionnelle. La diode électroluminescente 24 peut permettre à la carte électronique 300 de fournir diverses indications, par exemple pour indiquer que le raccordement avec le poste de contrôle 13 est opérationnel, qu'un tir a été détecté par la carte électronique 300, ou que la calibration de l'unité de mesure inertielle IMU 314 est en cours.

La molette de correction de chute de balle 27 est aussi optionnelle. En effet, il existe des jeux de simulation adaptés à des tirs courte distance, comme par exemple des jeux simulant des objectifs situés à moins de 300 mètres du soldat. La chute de balle peut alors être négligée dans de tels jeux de simulation.

L'unité de mesure inertielle IMU 314 est configurée pour fournir des mesures inertielles, plus particulièrement les angles d'Euler, représentatives de l'axe de visée du fusil 11.

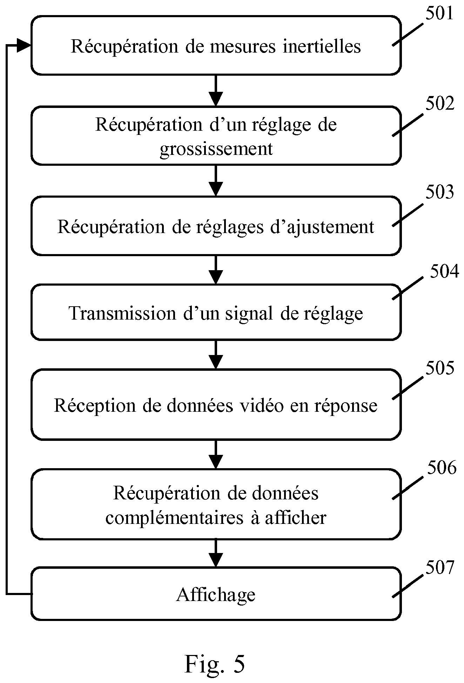

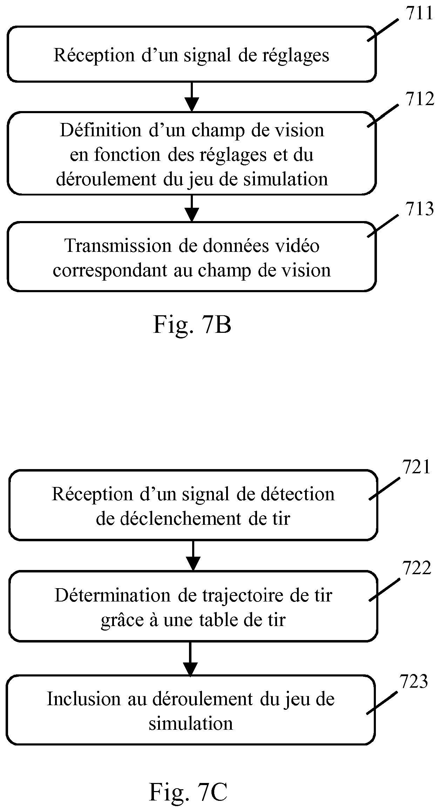

L'afficheur 21 est configuré pour afficher une portion de l'environnement virtuel. Ladite portion affichée dépend notamment de l'axe de visée tel que notamment défini par les mesures inertielles de l'unité de mesure inertielle IMU 314. En effet, le soldat en simulation est considéré comme étant placé à une position prédéterminée dans l'environnement virtuel, comme l'est un avatar dans tout jeu de simulation. La position de cet avatar peut d'ailleurs être définie en appliquant un décalage spatial prédéfini par rapport à la position d'un autre avatar dans l'environnement virtuel, comme par exemple un observateur (« spotter » en anglais) accompagnant le soldat en mission. L'observateur peut être simulé sur un poste de contrôle supplémentaire, synchronisé par exemple par l'intermédiaire d'un serveur, avec le poste de contrôle 13, comme dans un mode de jeu multi-joueurs en réseau (« networked multiplayer gaming mode » en anglais) aussi dénommé « netplay ». Le nombre de poste de contrôle pour une simulation n'est pas limité. Le tireur peut ainsi être intégré dans un groupe de plusieurs dizaines de militaires. Lorsque l'avatar de l'observateur, dont la position sert de référence pour l'avatar du soldat en simulation avec le fusil 11, se déplace dans l'environnement virtuel pour des raisons tactiques, la position de l'avatar du soldat en simulation avec le fusil 11 est mise à jour. Un champ de vision FOV (« Field Of View » en anglais) du soldat en simulation via une lunette simulée par la lunette de simulation 12 est défini de manière cohérente avec le champ de vision qu'aurait ledit soldat sur le terrain avec une lunette réelle (celle qui est simulée), en appliquant un facteur de grossissement défini par le réglage de la molette de définition de grossissement 26. Toute action de réglage réalisée sur la molette de correction de dérive 25 déplace latéralement ce champ de vision selon un angle proportionnel à l'action de réglage réalisée. Toute action de réglage réalisée sur la molette de correction de correction de chute de balle 27 déplace verticalement ce champ de vision selon un angle proportionnel à l'action de réglage réalisée. A noter que la lunette de simulation ne bouge pas, ni l'axe de visée du fusil 11, seulement le champ de vision via l'afficheur 21. Ce champ de vision FOV définit ainsi ladite portion de l'environnement virtuel affichée via l'afficheur 21. Les données vidéo permettant de reproduire ladite portion de l'environnement à afficher par l'afficheur 21 sont transmises à la lunette de simulation 12 par le poste de contrôle 13. L'afficheur 21 est en outre configuré pour afficher éventuellement des informations concernant les réglages effectués via la molette de correction de dérive 25, la molette de définition de grossissement 26, et la molette de correction de chute de balle 27. L'afficheur 21 est en outre configuré pour afficher éventuellement des informations concernant des conditions atmosphériques simulées. L'afficheur 21 est en outre configuré pour afficher éventuellement des informations concernant des munitions utilisées en simulation. Cet aspect est détaillé ci-après en relation avec les Figs. 5 et 7B.

L'unité de mesure inertielle IMU 314 peut être calibrée une fois pour toute vis-à-vis du magnétomètre que inclut ladite unité de mesure inertielle IMU 314 en effectuant des formes de « 8 » dans diverses directions avec la lunette de simulation 12 (éventuellement montée sur le fusil 11). On retrouve cette démarche dans la calibration des magnétomètres de téléphones intelligents (« smartphones » en anglais). Cela permet de prendre en compte les effets du champ magnétique terrestre et de parasites magnétiques présents dans l'environnement physique dans lequel le soldat en simulation évolue au cours de la simulation. Un calibrage complémentaire peut être appliqué, au début de chaque simulation. Le fusil 11, équipé de la lunette de simulation 12, peut être posé sur le sol pour définir une élévation de référence. La calibration est déclenchée par le poste de contrôle 13 qui instruit en conséquence la carte électronique 300, pour réinitialiser les angles d'Euler ou les quaternions correspondants à l'attitude de l'unité de mesure inertielle IMU 314 dans l'espace. La réinitialisation des angles d'Euler ou des quaternions marque une direction de référence, qui est donnée par l'axe actuel du champ de vision de l'avatar représentant le soldat en simulation (par exemple, un axe par défaut : comme dans tout jeu vidéo en mode POV (« Point Of View » en anglais), la séquence de jeu commence selon un axe de champ de vision d'avatar par défaut) ou par l'axe de champ de vision de l'observateur susmentionné (par exemple, aussi un axe par défaut).

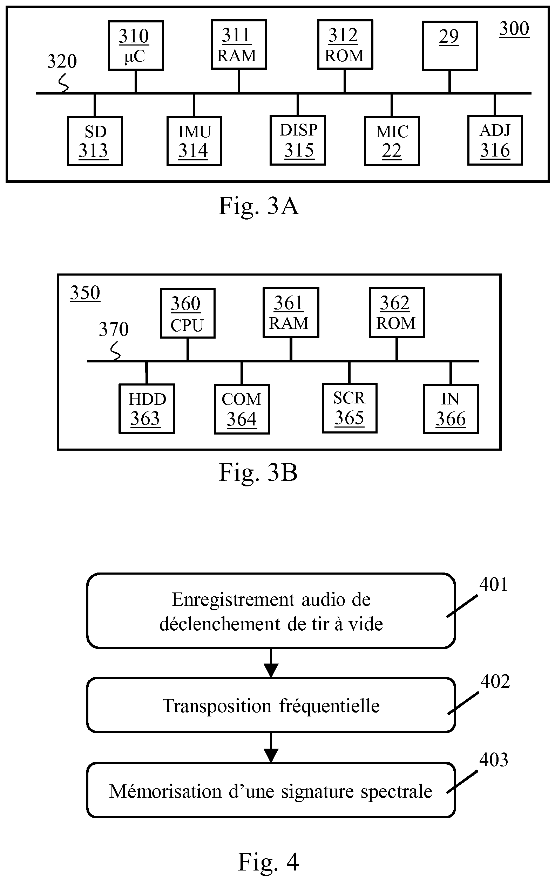

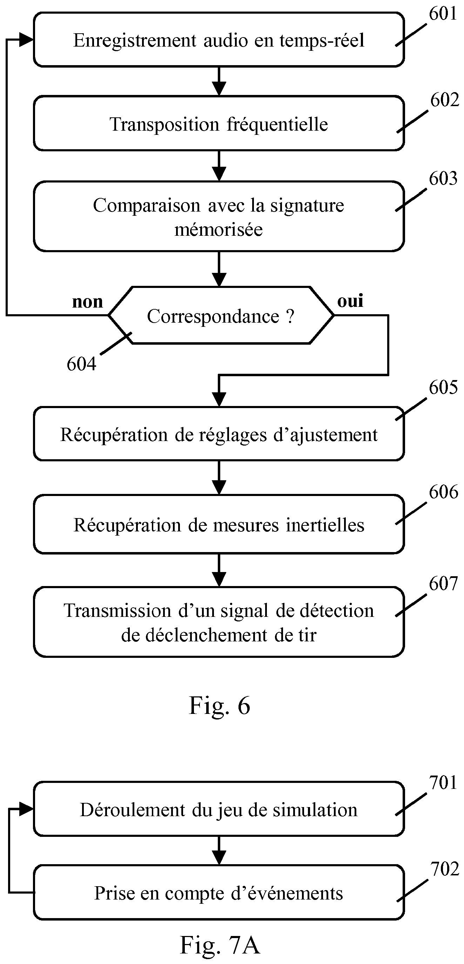

Le microphone 22 est destiné à enregistrer les bruits ambiants dans le but de permettre de détecter un déclenchement de tir à vide effectué par le soldat en simulation avec le fusil 11. Cet aspect est détaillé ci-après en relation avec la Fig. 6. Cela nécessite une définition préalable de signature. Un mode de réalisation est détaillé ci-après en relation avec la Fig. 4.

Comme montré sur la Fig. 2, le microphone 22 est préférentiellement placé du même côté de la lunette de simulation 12 que le mécanisme de fixation standard 23. Cela permet au microphone 22 de mieux capter les sons de déclenchement de tir à vide effectué par le soldat en simulation avec le fusil 11. La position du microphone 22 peut être différemment adaptée pour améliorer la proximité du microphone 22 avec le mécanisme de déclenchement de tir sur le fusil 11, afin d'en capter mieux le son et en améliorer la détection.

Les réglages effectués par le soldat en simulation grâce au moins à la molette de correction de dérive 25 et éventuellement grâce à la molette de correction de chute de balle 27, ainsi que l'axe de visée défini notamment par les mesures inertielles de l'unité de mesure inertielle IMU 314, au moment de la détection du déclenchement de tir à vide, sont analysés pour valider ou pas le tir. Cet aspect est détaillé par la suite en relation avec les Figs. 7A et 7C.

Dans un mode de réalisation particulier, l'unité de mesure inertielle IMU 314 est complétée par une autre l'unité de mesure inertielle IMU destinée à être placée sur le canon du fusil 11. Cette autre unité de mesure inertielle IMU est installée dans un boîtier séparé du reste de la lunette de simulation 12, ledit boîtier étant monté sur le fusil 11 grâce à un mécanisme de fixation standard, par exemple de type rail Picatinny (les fusils actuels sont équipés de ce type de rail pratiquement tout le long du canon). Le système électronique de la lunette de simulation 12 peut ainsi être réparti entre les deux boîtiers, chacun ayant potentiellement sa propre interface de raccordement avec le poste de contrôle 13. L'unité de mesure inertielle IMU 314 est configurée en mode « fusion de données » (mode de fonctionnement basse fréquence que l'on trouve classiquement dans les unités de mesure inertielle sur étagère) de manière à détecter des mouvements grossiers de changement d'axe de visée du fusil 11, et l'autre unité de mesure inertielle IMU est configurée en mode « données brutes » (mode de fonctionnement haute fréquence que l'on trouve aussi classiquement dans les unités de mesure inertielle sur étagère) pour détecter des mouvements fins de changement d'axe de visée du fusil 11, par exemple liés à la respiration du soldat en simulation. L'unité de mesure inertielle IMU 314 et cette autre unité de mesure inertielle IMU ont des sensibilités sur des plages de mesures complémentaires, pour permettre à la carte électronique 300 d'affiner les mesures inertielles de l'unité de mesure inertielle IMU 314, *e.g.* les angles d'Euler, par celles de cette autre unité de mesure inertielle IMU. Cette autre unité de mesure inertielle IMU est reliée à la carte électronique 300, par exemple grâce à une liaison série ou un câble USB, pour que la carte électronique 300 puisse traiter les mesures inertielles qui en proviennent. Cette autre unité de mesure inertielle IMU est calibrée en même temps que l'unité de mesure inertielle IMU 314 et de la même manière.

La **Fig. 3A** illustre schématiquement un exemple d'architecture matérielle de la carte électronique 300 incluse dans la lunette de simulation 12.

La carte électronique 300 inclut alors, reliés par un bus de communication 320 : un processeur ou microprocesseur µC 310 ; une mémoire vive SRAM (« Static Read Access Memory » en anglais) 311 ; une mémoire FLASH (non représentée) ; une mémoire morte ROM (« Read Only Memory » en anglais) 312 de type EEPROM (Electrically Erasable Programmable Read Only Memory); l'interface de raccordement 29 ; une unité de stockage ou un lecteur de support de stockage d'informations 313, tel qu'un lecteur de cartes SD (« Secure Digital» en anglais) ; l'unité de mesure inertielle IMU 314 ; une interface de communication DISP 315 adaptée pour communiquer avec l'afficheur 21 ; une interface de communication MIC 316 adaptée pour communiquer avec le microphone 22 ; et un ensemble ADJ 316 d'interfaces de communication adaptées pour communiquer respectivement avec la molette de correction de dérive 25, avec la molette de définition de grossissement 26 et avec la molette de correction de chute de balle 27.

Le microprocesseur µC 310 est capable d'exécuter des instructions chargées dans la mémoire vive SRAM 311 à partir de la mémoire FLASH et/ou de la mémoire morte EEPROM 312, ou d'une mémoire externe, ou d'un support de stockage, ou d'un réseau de communication. Lorsque la carte électronique 300 est mise sous tension, le microprocesseur µC 310 est capable de lire de la mémoire vive SRAM 311 des instructions et de les exécuter. Ces instructions forment un programme d'ordinateur causant l'implémentation, par le microprocesseur µC 310, de tout ou partie des algorithmes et étapes décrits ci-après en relation avec la lunette de simulation 12.

Tout ou partie des algorithmes et étapes décrits ci-après en relation avec la lunette de simulation 12 peut ainsi être implémenté sous forme logicielle par exécution d'un ensemble d'instructions par une machine programmable, par exemple un processeur de signal numérique DSP (« Digital Signal Processor » en anglais) ou un microprocesseur.

En variante, tout ou partie des algorithmes et étapes décrits ci-après en relation avec la lunette de simulation 12 peut être implémenté sous forme matérielle par une machine ou un composant (« chip » en en anglais) dédié ou un ensemble de composants (« chipset » en anglais) dédié, comme par exemple un composant FPGA (« Field-Programmable Gate Array » en anglais) ou un composant ASIC (« Application-Specific Integrated Circuit » en anglais).

La **Fig. 3B** illustre schématiquement un exemple d'architecture matérielle de la carte électronique 350 incluse dans le poste de contrôle 13.

La carte électronique 350 inclut alors, reliés par un bus de communication 370 : un processeur CPU (« Central Processing Unit » en anglais) 360 ; une mémoire vive RAM 361 ; une mémoire morte ROM 362 ; une unité de stockage, telle qu'un disque dur HDD (« Hard Disk Drive » en anglais), ou un lecteur de support de stockage d'informations 363 ; une interface de communication COM 364 adaptée pour communiquer avec la lunette de simulation 12 ; une interface de communication SCR 365 adaptée pour communiquer avec l'écran du poste de contrôle 13 ; et une interface de communication IN 366 adaptée pour communiquer avec le(s) périphérique(s) d'entrée du poste de contrôle 13.

Le processeur CPU 360 est capable d'exécuter des instructions chargées dans la mémoire vive RAM 361 à partir de la mémoire morte ROM 362, ou d'une mémoire externe, ou d'un support de stockage, ou d'un réseau de communication. Lorsque la carte électronique 350 est mise sous tension, le processeur CPU 360 est capable de lire de la mémoire vive RAM 361 des instructions et de les exécuter. Ces instructions forment un programme d'ordinateur causant l'implémentation, par le processeur CPU 360, de tout ou partie des algorithmes et étapes décrits ci-après en relation avec le poste de contrôle 13.

Tout ou partie des algorithmes et étapes décrits ci-après en relation avec le poste de contrôle 13 peut ainsi être implémenté sous forme logicielle par exécution d'un ensemble d'instructions par une machine programmable, par exemple un processeur de signal numérique DSP ou un microprocesseur.

En variante, tout ou partie des algorithmes et étapes décrits ci-après en relation avec le poste de contrôle 13 peut être implémenté sous forme matérielle par une machine ou un composant dédié ou un ensemble de composants dédié, comme par exemple un composant FPGA ou un composant ASIC.

La **Fig. 4** illustre schématiquement un algorithme d'initialisation du mécanisme de détection de déclenchement de tir à vide inclus dans la lunette de simulation 12 et implémenté grâce à la carte électronique 300. L'algorithme de la Fig. 4 vise à permettre à la lunette de simulation 12 de construire une signature de déclenchement de tir à vide adaptée au fusil 11 sur lequel est fixée la lunette de simulation 12. L'algorithme de la Fig. 4 est exécuté sur instruction du poste de contrôle 13, via l'interface de raccordement 29, avant d'immerger le soldat dans l'environnement virtuel.

Dans une étape 401, la lunette de simulation 12 réalise, grâce au microphone 22, un enregistrement audio d'un déclenchement de tir à vide effectué avec le fusil 11. Il est préférable pendant cette opération de limiter les bruits ambiants, de manière à ce que l'enregistrement audio ne contienne en substance que le déclenchement de tir à vide en question. L'activation du microphone 22 pour démarrer l'enregistrement audio et la désactivation du microphone 22 pour arrêter l'enregistrement audio sont déclenchées sur instruction du poste de contrôle 13, via l'interface de raccordement 29.

Dans une étape 402, la lunette de simulation 12 effectue une transposition fréquentielle de l'enregistrement audio effectué à l'étape 401. Une transformation de Fourier rapide FFT (« Fast Fourier Transform » en anglais) est préférentiellement implémentée pour ce faire, par exemple en utilisant l'algorithme de Cooley-Tukey. Cette transposition dans le domaine fréquentiel de l'enregistrement audio définit une signature spectrale représentative d'un déclenchement de tir à vide effectué avec le fusil 11.

Dans une étape 403, la lunette de simulation 12 mémorise la signature spectrale ainsi définie, de manière à permettre ultérieurement de reconnaître un déclenchement de tir à vide effectué avec le fusil 11 en conditions de simulation, tel que décrit ci-après en relation avec la Fig. 6.

La **Fig. 5** illustre schématiquement un algorithme, implémenté par la lunette de simulation 12 grâce à la carte électronique 300, de gestion de l'afficheur 21.

Dans une étape 501, la carte électronique 300 récupère des mesures inertielles auprès de l'unité de mesure inertielle IMU 314, et éventuellement de l'autre unité de mesure inertielle IMU évoquée en relation avec la Fig. 2. Dans un mode de réalisation particulier, ces mesures inertielles sont les angles d'Euler ou les quaternions correspondants à l'attitude du fusil 11 dans l'espace.

Dans une étape 502, la carte électronique 300 récupère des informations de réglage de grossissement, tel que défini par la molette de définition de grossissement 26.

Dans une étape 503, la carte électronique 300 récupère des informations de réglage de correction de dérive, tel que défini par la molette de correction de dérive 25. Préférentiellement, la carte électronique 300 récupère des informations de réglage de correction de chute de balle, tel que défini par la molette de correction de chute de balle 27. Ces réglages forment des réglages d'ajustement par rapport à l'axe de visée du fusil 11 défini par la position de l'avatar représentant le soldat en simulation dans l'environnement virtuel (ou par décalage prédéfini par rapport à la position d'un avatar représentant l'observateur) et par l'axe de champ de vision du soldat en simulation dans l'environnement virtuel, c'est-à-dire l'axe de référence obtenu par la calibration de l'unité de mesure inertielle IMU 314 (et éventuellement de l'autre unité de mesure inertielle évoquée en relation avec la Fig. 2) puis modifié selon les mesures inertielles fournies par l'unité de mesure inertielle IMU 314 (et éventuellement par l'autre unité de mesure inertielle évoquée en relation avec la Fig. 2).

Dans une étape 504, la carte électronique 300 transmet au poste de contrôle 13 un signal de réglage, incluant les mesures inertielles récupérées à l'étape 501, les informations de réglage de grossissement récupérées à l'étape 502, les informations de réglage de correction de dérive récupérées à l'étape 503 et les informations de réglage de correction de chute de balle éventuellement récupérées à l'étape 503. Tel que décrit ci-après en relation avec la Fig. 7B, ces informations permettent au poste de contrôle 13 de définir des données vidéo à faire afficher par l'afficheur 21.

Dans une étape 505, la carte électronique 300 reçoit du poste de contrôle 13 ces données vidéo à faire afficher par l'afficheur 21.

Dans une étape 506, la carte électronique 300 détermine si des données complémentaires sont à afficher en superposition des données vidéo fournies par le poste de contrôle 13 et récupère lesdites données complémentaires le cas échéant. Ces données complémentaires sont par exemple les informations de réglage de grossissement récupérées à l'étape 502, les informations de réglage de correction de dérive éventuellement récupérées à l'étape 503 et les informations de réglage de correction de chute de balle éventuellement récupérées à l'étape 503. Ces données complémentaires sont par exemple aussi des informations représentatives de munitions utilisées en simulation. Ces données complémentaires sont par exemple aussi des informations concernant des conditions atmosphériques simulées (température, pression, direction et force du vent). La carte électronique 300 détermine préférentiellement quelles données complémentaires sont à afficher, d'après des consignes de configuration transmises par le poste de contrôle 13. Ces consignes de configuration sont typiquement définies par l'instructeur en charge de vérifier le déroulement de la simulation. En variante, l'affichage de certaines informations en superposition des données vidéo est décidé par le soldat en simulation. Par exemple, le soldat en simulation peut décider d'afficher ainsi les informations de réglage de correction de dérive éventuellement récupérées à l'étape 503, par appui sur la molette de correction de dérive 25 (tel que montré par la flèche A sur ma Fig. 2) et le soldat en simulation peut décider d'afficher ainsi les informations de réglage de correction de chute de balle éventuellement récupérées à l'étape 503, par appui sur la molette de correction de chute de balle 27 (tel que montré par la flèche B sur ma Fig. 2).

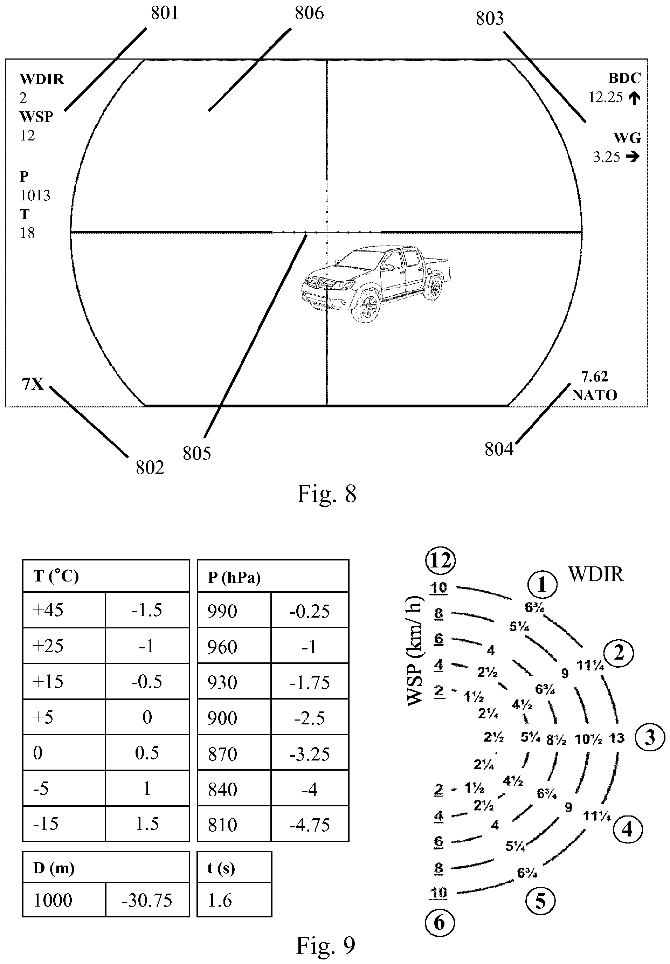

Dans une étape 507, la carte électronique 300 transmet à l'afficheur 21, pour affichage, les données vidéo reçues à l'étape 505, et configure l'afficheur 21 pour affichage par superposition des éventuelles données complémentaires identifiées à l'étape 506. L'affichage par superposition s'effectue par exemple selon une technique de type OSD (« On Screen Display » en anglais), telle qu'utilisée dans l'affichage des menus des dispositifs électroniques grand public à écran. Si le réticule inhérent aux lunettes de tir n'est pas directement représenté dans les données vidéo transmises par le poste de contrôle 13 à la carte électronique 300, ce réticule peut aussi être ajouté par superposition par la carte électronique 300. Un exemple de rendu sur l'afficheur 21 est schématiquement illustré sur la **Fig. 8****.**

La **Fig. 6** illustre schématiquement un algorithme, implémenté par la lunette de simulation 12 grâce à la carte électronique 300, d'implémentation du mécanisme de détection de déclenchement de tir à vide.

Dans une étape 601, la carte électronique 300 effectue, grâce au microphone 22, un enregistrement audio en temps réel des bruits ambiants, en cours de simulation.

Dans une étape 602, la carte électronique 300 effectue une transposition fréquentielle de l'enregistrement audio. Une transformation de Fourier rapide FFT est préférentiellement implémentée pour ce faire, comme dans le cadre de l'étape 402.

Dans une étape 603, la carte électronique 300 effectue une comparaison de la transposition fréquentielle effectuée à l'étape 602 avec une signature préétablie de déclenchement de tir à vide pour le fusil 11. Cette signature peut être un modèle préétabli. Par exemple, le poste de contrôle 13 dispose d'une librairie de signatures pour un ensemble de modèles de fusil respectifs, et la carte électronique 300 reçoit la signature en question de la part du poste de contrôle 13, suite typiquement à une configuration effectuée par l'instructeur en charge de vérifier le déroulement de la simulation. Cette signature peut aussi être obtenue par la carte électronique 300 comme déjà décrit en relation avec la Fig. 4, ce qui peut aussi d'ailleurs permettre de peupler la librairie susmentionnée pour des simulations ultérieures.

Dans une étape 604, la carte électronique 300 vérifie s'il y a correspondance entre la transposition fréquentielle effectuée à l'étape 602 et la signature en question. En d'autres termes, la carte électronique 300 effectue une recherche de corrélation fréquentielle entre la transposition fréquentielle effectuée à l'étape 602 et la signature en question, avec un taux de probabilité supérieur à un seuil prédéfini. S'il y a correspondance, un déclenchement de tir à vide effectué avec le fusil 11 en conditions de simulation est détecté et une étape 605 est effectuée ; sinon, l'étape 601 est réitérée.

Dans l'étape 605, la carte électronique 300 récupère des informations de réglages d'ajustement par rapport à l'axe de visée du fusil 11 défini par les mesures inertielles. Comme déjà mentionné en relation avec la Fig. 5, ces réglages correspondent à ceux effectués via la molette de correction de dérive 25 et éventuellement via la molette de correction de chute de balle 27.

Dans une étape 606, la carte électronique 300 récupère les mesures inertielles, de manière à permettre de connaître l'axe de visée du fusil 11 dans l'environnement virtuel.

Dans une étape 607, la carte électronique 300 transmet au poste de contrôle 13 un signal de détection de déclenchement de tir, incluant les mesures inertielles récupérées à l'étape 606, les informations de réglage de correction de dérive récupérées à l'étape 605 et les informations de réglage de correction de chute de balle éventuellement récupérées à l'étape 605. Tel que décrit ci-après en relation avec la Fig. 7C, ces informations permettent au poste de contrôle 13 de déterminer si le tir est valide ou pas. L'étape 601 est ensuite réitérée.

Une autre approche pour reconnaître un déclenchement de tir à vide effectué avec le fusil 11 en conditions de simulation est de rechercher une corrélation temporelle entre l'enregistrement audio effectué par le microphone 22 en cours de simulation et un enregistrement audio d'un déclenchement de tir à vide effectué avec le fusil 11 préalablement à la simulation. La recherche de corrélation s'effectue alors directement à partir de l'enregistrement audio effectué par le microphone 22 en cours de simulation, sans passer par une transposition spectrale. La recherche de corrélation consiste à déterminer si à un instant donné (ou plutôt sur une période donnée, car le déclenchement de tir n'est pas instantané) l'enregistrement audio fait en simulation par le microphone 22 correspond à l'enregistrement audio réalisé préalablement à la simulation, avec un taux de probabilité supérieur à un seuil prédéfini. La recherche de corrélation s'effectue alors grâce à un filtre spécifique, appelé « filtre adapté » (« matched filter » en anglais), aussi appelé « filtre de North ». Le filtre adapté est alors formé sur la base de l'enregistrement audio réalisé préalablement à la simulation, temporellement inversé. L'utilisation d'un tel filtre permet de maximiser le rapport signal-à-bruit, en considérant notamment que l'enregistrement audio fait en simulation par le microphone 22 peut inclure un bruit ambiant non présent dans l'enregistrement audio effectué préalablement à la simulation.

A noter que les informations de réglage de correction de dérive, les informations de réglage de correction de chute de balle et les informations de réglage de grossissement peuvent être transmises par la carte électronique 300 dans un processus indépendant des algorithmes des Figs. 5 et/ou 6 (par exemple par transmission d'un signal dédié à chaque fois qu'une modification de réglage est effectuée), et auquel cas le signal de réglage de l'algorithme de la Fig. 5 et/ou le signal de déclenchement de tir de la Fig. 6 n'ont pas besoin d'inclure de telles informations. Le poste de contrôle 13 est alors en effet en mesure de déterminer quels réglages ont été effectués par le soldat en simulation au moment de la réception du signal de réglage de l'algorithme de la Fig. 5 et/ou du signal de déclenchement de tir de la Fig. 6.

La **Fig. 7A** illustre schématiquement un algorithme, implémenté par le poste de contrôle 13 grâce à la carte électronique 350, d'implémentation d'un jeu de simulation.

Dans une étape 701, la carte électronique 350 déroule un jeu de simulation selon un scénario de mission prédéterminé. Typiquement, le scénario de la mission (nombre de cibles, leurs positions respectives à un instant donné dans l'environnement virtuel, etc.) est configuré par l'instructeur en charge de surveiller la simulation.

Dans une étape 702, la carte électronique 350 prend en compte des événements venant modifier le déroulement du jeu de simulation. Par exemple, de tels événements sont des changements de configuration effectués par l'instructeur en charge de surveiller la simulation. Plus particulièrement, de tels événements sont liés à une interaction du soldat en simulation avec l'environnement virtuel, et notamment des détections de déclenchement de tir par le soldat en simulation. Cet aspect est détaillé ci-après en relation avec la Fig. 7C.

La **Fig. 7B** illustre schématiquement un algorithme, implémenté par le poste de contrôle 13 grâce à la carte électronique 350, de définition de données vidéo à fournir à l'afficheur 21.

Dans une étape 711, la carte électronique 350 reçoit un signal de réglage de la part de la lunette de simulation 12, comme évoqué en relation avec la Fig. 5.

Dans une étape 712, la carte électronique 350 définit un champ de vision pour l'avatar représentant le soldat en simulation dans l'environnement virtuel. Ce champ de vision est défini, selon des dimensions prédéfinies (*i.e.* cadre) :
- en prenant comme référence centrale du champ de vision l'axe de visée du fusil 11, tel que notamment défini par les mesures inertielles ;
- en ajustant le grossissement, dans lesdites dimensions prédéfinies, selon l'action de réglage réalisée sur la molette de définition de grossissement 26 ;
- en ajustant latéralement cette référence centrale selon un angle proportionnel à l'action de réglage réalisée sur la molette de correction de dérive 25 ;
- en ajustant éventuellement verticalement cette référence centrale selon un angle proportionnel à l'action de réglage réalisée sur la molette de correction de chute de balle 27.

Dans une étape 713, la carte électronique 350 transmet à la lunette de simulation 12, en vue d'un affichage par l'afficheur 21, des données vidéo de l'environnement virtuel correspondant au champ de vision défini à l'étape 712. Ces données vidéo peuvent inclure la représentation d'un réticule inhérent aux lunettes de tir, comme on peut le voir sur la Fig. 8.

La **Fig. 7C** illustre schématiquement un algorithme, implémenté par le poste de contrôle 13 grâce à la carte électronique 350, de vérification d'un tir simulé.

Dans une étape 721, la carte électronique 350 reçoit un signal de détection de déclenchement de tir de la part de la lunette de simulation 12, comme évoqué en relation avec la Fig. 6.

Dans une étape 722, la carte électronique 350 détermine une trajectoire de tir dans l'environnement virtuel. La trajectoire de tir est déterminée par la position de l'avatar représentant le soldat en simulation dans l'environnement virtuel (ou par décalage prédéfini par rapport à la position d'un avatar représentant l'observateur) et l'axe de visée du fusil, corrigé latéralement par le réglage de dérive et corrigé éventuellement en élévation par le réglage de correction de chute de balle. La carte électronique 350 utilise aussi pour ce faire un jeu de tables de tir représentatives d'un modèle de déviation subie par une balle tirée avec le fusil 11. Le jeu de tables de tir fournit, en fonction de la distance parcourue par une balle simulée, des informations de déviation de tir en fonction en outre de la force et de la direction du vent et éventuellement des informations de chute de balle. Il existe typiquement un jeu de tables de tir pour chaque type de munitions et de fusil utilisables en simulation. Un exemple d'une telle table de tir est décrit ci-après en relation avec la Fig. 9.

Chaque table de tir est associée à une distance prédéfinie (*e.g.* 1000 mètres) ou à un intervalle de distances (*e.g*. de 900 à 1100 mètres) et fournit des informations de déviation de tir en fonction de la force et de la direction du vent. L'unité généralement utilisée pour représenter une déviation de tir est la minute d'angle MOA (« Minute Of Angle » en anglais) ou le millième angulaire MIL utilisé par l'artillerie (un MIL est égal à un angle représentant un mètre à mille mètres). La direction du vent est généralement donnée selon un repérage de cadrant horaire (à 12 , le vent vient de face ; à 3 h, le vent vient à 90° de la droite ; à 6 h, le vent vient de dos ; à 9 h, le vent vient à 90° de la gauche). Pour des distances différentes avec un même type de munitions et un même type de fusil, la déviation est différente (la déviation augmente avec la distance).

Chaque table de tir peut en outre fournir une information de chute de balle en fonction de la distance associée à ladite table de tir.

Chaque table de tir peut en outre fournir une information de chute de balle (ou de frein de chute de balle), en fonction de la température ambiante, ainsi qu'une information de chute de balle en fonction de la pression.

Chaque table de tir peut en outre fournir une information de temps de vol de la balle pour parcourir la distance associée à ladite table de tir.

La carte électronique 350 détermine ainsi la trajectoire de tir en partant de l'axe de visée du fusil, depuis la position de l'avatar du soldat en simulation dans l'environnement virtuel, corrigé latéralement par le réglage de dérive et corrigé éventuellement en élévation par le réglage de correction de chute de balle, puis en appliquant les données de déviation précisées dans le jeu de tables de tir applicable.

Lorsque les réglages ajustements compensent parfaitement les données de déviation inscrites dans la table de tir applicable en fonction de la distance de la cible, le point d'arrivée de la balle à la distance en question est à la croisée du réticule. Lorsque les réglages ajustements ne compensent pas parfaitement les données de déviation inscrites dans la table de tir applicable en fonction de la distance de la cible, le point d'arrivée de la balle à la distance en question est décalé par rapport à la croisée du réticule. Cela ne signifie pas pour autant que le tir est raté. En effet, lors de plusieurs tirs successifs, le soldat en simulation peut effectuer un premier tir avec des réglages d'ajustement grossiers grâce aux molettes de correction de dérive 25 et de chute de balle 27, voir où arrive la balle dans l'environnement virtuel, et ajuster le ou les tirs suivants en s'aidant des plots du réticule (ce qui change l'axe de visée du fusil 11). A noter d'ailleurs que le soldat en simulation se sert typiquement aussi de ces plots pour déterminer la distance par rapport à la cible dans l'environnement virtuel. En effet, ces plots sont séparés d'une distance prédéfinie dans le réticule, typiquement un MIL. En connaissant l'ordre de grandeur des dimensions de la cible, le soldat en simulation peut donc évaluer la distance de la cible en se servant des plots.

Dans une étape 723, le déroulement du jeu de simulation prend en compte la trajectoire du tir ainsi déterminée. Le point d'arrivée de la balle est matérialisé dans l'environnement virtuel par un effet spécial dépendant typiquement de la munition utilisée (nuage plus ou moins grand en fonction du calibre). Le déroulement du jeu de simulation peut prendre en compte le temps de vol de la balle pour augmenter le réalisme. Il est mis fin à l'algorithme de la Fig. 7C. La matérialisation du tir peut aussi dépendre de calculs de dégâts sur la cible, si celle-ci est touchée par le tir. Un modèle est utilisé, qui dépend de la nature de la cible et de son taux de protection, de la munition simulée (munitions de plus ou moins gros calibre, explosives ou non) et de la distance de la cible par rapport au soldat en simulation dans l'environnement virtuel (vitesse à l'impact). Si la cible n'est pas touchée par le tir, une imprécision statistique autour de la cible peut être utilisée pour rendre le tir plus aléatoire dans le déroulement du jeu de simulation. Il est alors mis fin à l'algorithme de la Fig. 7C.

La **Fig. 8** illustre schématiquement un exemple de rendu d'affichage sur l'afficheur 21.

Le rendu illustré sur la Fig. 8 montre le champ de vision 806 résultant des données vidéo générées par le poste de contrôle 13.

Le rendu illustré sur la Fig. 8 montre le réticule 805, avec ses plots, en superposition du champ de vision 806. Le poste de contrôle 13 a la possibilité de changer le type de réticule, qui est souvent spécifique à chaque marque de lunette.

Le rendu illustré sur la Fig. 8 montre un affichage de conditions atmosphériques 801, en superposition, d'une direction de vent simulée WDIR (ici à 2 h) et d'une force de vent simulée WSP (ici 12 km/h), ainsi qu'une température ambiante simulée T (ici 18°C) et une pression atmosphérique P (1013 hPa).

Le rendu illustré sur la Fig. 8 montre un affichage de facteur de grossissement 802 (ici 7 fois).

Le rendu illustré sur la Fig. 8 montre un affichage de réglage d'ajustement 803, à savoir de correction de chute de balle BDC (ici 12 ¼ vers le haut) et de correction de dérive WG (ici 3 ¼ vers la droite).

Le rendu illustré sur la Fig. 8 montre un affichage de munitions simulées 804.

La **Fig. 9** illustre schématiquement une table de tir, utilisée par la carte électronique 350, pour vérifier un tir simulé.

La Fig. 9 montre sur la gauche un premier tableau de correction de chute de balle (correction donnée en minutes d'angle sur la droite du tableau) à appliquer en fonction de paliers de température (paliers de température indiqués sur la gauche du tableau en °C). Une correction de chute de balle positive indique un frein de chute de balle (la balle chute même à température ambiante élevée à cause de la distance).

La Fig. 9 montre, à droite du premier tableau de correction de chute de balle, un second tableau de correction de chute de balle (correction donnée en minutes d'angle sur la droite du tableau) à appliquer en fonction de paliers de pression atmosphérique (paliers de pression atmosphérique indiqués sur la gauche du tableau en hPa).

La Fig. 9 montre, en dessous du premier tableau de correction de chute de balle, une correction de chute de balle liée à la distance (1000 mètres ici), et juste à côté une indication de temps de vol de la balle pour parcourir la distance associée.

Sur la droite de la Fig. 9 est représenté un tableau de correction de dérive en fonction de la direction du vent et de la force du vent. Les indications cerclées représentent la direction du vent (seule une moitié du repérage horaire est présentée puisque les données sont symétriques). La force du vent (en km/h) est indiquée aux extrémités des demi-cercles représentés, et la correction à appliquer est indiquée sur lesdits demi-cercles pour chaque direction prédéfinie.

## Revendications

1. Lunette de simulation de tir (12) destinée à être installée sur un fusil (11), incluant une première unité de mesure inertielle (314), un dispositif de réglage de correction de dérive (25), un système électronique (300), un microphone (22), un afficheur (21) et une interface (28) de raccordement à un poste de contrôle (13), la lunette de simulation de tir étant telle que le système électronique inclut :
- des moyens pour recevoir (505), via l'interface de raccordement, des données vidéo représentatives d'un champ de vision, au travers d'une lunette simulée, dans l'environnement virtuel ;
- des moyens pour afficher (507) sur l'afficheur les données vidéo reçues ;
- des moyens pour obtenir (601) un enregistrement audio effectué en temps réel par le microphone ;
- des moyens pour comparer (603) l'enregistrement audio avec une signature prédéterminée de déclenchement de tir avec le fusil ; et
- des moyens pour transmettre (607) au poste de contrôle via l'interface de raccordement, lorsque l'enregistrement audio coïncide avec la signature prédéterminée, un signal de détection de déclenchement de tir associé avec des mesures inertielles fournies par la première unité de mesure inertielle et avec un premier réglage d'ajustement fourni par le dispositif de réglage de correction de dérive, afin de permettre au poste de contrôle de déterminer une trajectoire de tir dans l'environnement virtuel.

2. Lunette de simulation de tir selon la revendication 1, incluant en outre un dispositif de réglage de correction de chute de balle (27), et telle que le signal de détection de déclenchement de tir est en outre associé avec un second réglage d'ajustement fourni par le dispositif de réglage de correction de chute de balle, afin de permettre au poste de contrôle d'en tenir compte pour déterminer la trajectoire de tir dans l'environnement virtuel.

3. Lunette de simulation de tir selon l'une quelconque des revendications 1 et 2, dans laquelle le système électronique inclut des moyens pour effectuer (401) un enregistrement audio d'un déclenchement de tir à vide effectué avec le fusil et des moyens pour définir (403) la signature à partir de l'enregistrement audio du déclenchement de tir à vide.

4. Lunette de simulation de tir selon l'une quelconque des revendications 1 à 3, dans laquelle le système électronique inclut des moyens pour effectuer (602) une transposition fréquentielle de l'enregistrement audio et dans laquelle la signature prédéterminée est une signature spectrale.

5. Lunette de simulation de tir selon l'une quelconque des revendications 1 à 4, incluant en outre une seconde unité de mesure inertielle, et dans laquelle le système électronique inclut des moyens pour affiner les mesures inertielles fournies par la première unité de mesure inertielle grâce à des mesures inertielles fournies par la seconde unité de mesure inertielle, la première unité de mesure inertielle étant configurée en mode fusion de données et la seconde unité de mesure inertielle étant configurée en mode données brutes.

6. Système de simulation incluant au moins un poste de contrôle et au moins une lunette de simulation de tir (12) selon l'une quelconque des revendications 1 à 5, chaque lunette de simulation étant raccordée à un dit poste de contrôle (13), chaque poste de contrôle incluant des moyens pour déterminer (722) la trajectoire de tir dans l'environnement virtuel, lorsque ledit poste de contrôle reçoit le signal de détection de déclenchement de tir en provenance d'une dite lunette de simulation qui lui est raccordée.

7. Système de simulation selon la revendication 6, dans lequel chaque poste de contrôle incluant au moins un jeu de tables de tir fournissant, en fonction d'une distance parcourue par une balle simulée, des données de déviation de tir en fonction en outre de la force et de la direction du vent, et dans lequel les moyens pour déterminer la trajectoire de tir dans l'environnement virtuel incluent :
- des moyens pour déterminer une position du soldat en simulation dans l'environnement virtuel au moment du déclenchement de tir ;
- des moyens pour déterminer l'axe de visée du fusil grâce aux mesures inertielles associées avec le signal de détection de déclenchement de tir ;
- des moyens pour corriger latéralement l'axe de visée du fusil par le premier réglage d'ajustement ; et
- des moyens pour appliquer les données de déviation précisées dans le jeu de tables de tir.

8. Système de simulation selon la revendication 7, dans lequel chaque jeu de tables de tir fournit, en fonction d'une distance parcourue par une balle simulée, des données de chute de balle, dans lequel la lunette de simulation comporte un dispositif de réglage de correction de chute de balle (27), dans lequel le signal de détection de déclenchement de tir est en outre associé avec un second réglage d'ajustement fourni par le dispositif de réglage de correction de chute de balle, dans lequel les moyens pour déterminer la trajectoire de tir dans l'environnement virtuel incluent en outre des moyens pour corriger en élévation l'axe de visée du fusil par le second réglage d'ajustement.

9. Système de simulation selon la revendication 8, dans lequel chaque jeu de tables de tir fournit, en fonction d'une distance parcourue par une balle simulée, des données de chute de balle en fonction d'une température ambiante et d'une pression atmosphérique dans l'environnement simulé.

10. Système de simulation selon l'une quelconque des revendications 7 à 9, dans lequel la position du soldat en simulation dans l'environnement virtuel est fixée par application d'un décalage prédéfini par rapport à un avatar d'un observateur accompagnant le soldat en simulation dans l'environnement virtuel.

11. Procédé implémenté par une lunette de simulation de tir (12) qui est installée sur un fusil (11) et qui inclut une unité de mesure inertielle (314), un dispositif de réglage de correction de dérive (25), un système électronique (300), un microphone (22), un afficheur (21) et une interface (28) de raccordement à un poste de contrôle (13), le procédé étant tel que le système électronique effectue les étapes suivantes :
- recevoir (505), via l'interface de raccordement, des données vidéo représentatives d'un champ de vision, au travers d'une lunette simulée, dans l'environnement virtuel ;
- afficher (507) sur l'afficheur les données vidéo reçues ;
- obtenir (601) un enregistrement audio effectué en temps réel par le microphone ;
- comparer (603) l'enregistrement audio avec une signature prédéterminée de déclenchement de tir avec le fusil ; et
- transmettre (607) au poste de contrôle via l'interface de raccordement, lorsque l'enregistrement audio coïncide avec la signature prédéterminée, un signal de détection de déclenchement de tir associé avec des mesures inertielles fournies par la unité de mesure inertielle et avec un réglage d'ajustement fourni par le dispositif de réglage de correction de dérive, afin de permettre au poste de contrôle de déterminer une trajectoire de tir dans l'environnement virtuel.

12. Procédé implémenté par un système de simulation incluant au moins un poste de contrôle (13) et au moins une lunette de simulation de tir (12) implémentant le procédé selon la revendication 11, chaque lunette de simulation étant raccordée à un dit poste de contrôle, le procédé étant tel que chaque poste de contrôle détermine (722) la trajectoire de tir dans l'environnement virtuel, lorsque ledit poste de contrôle reçoit le signal de détection de déclenchement de tir en provenance d'une dite lunette de simulation qui lui est raccordée.

13. Produit programme d'ordinateur, **caractérisé en ce qu'**il comprend des instructions pour implémenter le procédé selon la revendication 11, lorsque ledit programme est exécuté par un processeur (310).

14. Support de stockage d'informations, **caractérisé en ce qu'**il stocke un programme d'ordinateur comprenant des instructions pour implémenter le procédé selon la revendication 11, lorsque ledit programme est exécuté par un processeur (310).

## Patentansprüche

1. Schusssimulationsfernrohr (12) zur Anbringung an ein Gewehr (11), aufweisend eine erste Trägheitsmesseinheit (314), eine Driftkorrektur-Einstellvorrichtung (25), ein elektronisches System (300), ein Mikrofon (22), eine Anzeigeeinrichtung (21) und eine Schnittstelle (28) zum Anschluss an eine Kontrollstation (13), wobei das Schusssimulationsfernrohr so beschaffen ist, dass das elektronische System Folgendes aufweist:
- Mittel zum Empfang (505), über die Anschlussschnittstelle, der Videodaten, die für ein Sichtfeld durch ein simuliertes Fernrohr in der virtuellen Umgebung repräsentativ sind;
- Mittel zur Anzeige (507) der empfangenen Videodaten auf der Anzeigeeinrichtung;
- Mittel zum Erhalt (601) einer Audioaufzeichnung, die in Echtzeit durch das Mikrofon vorgenommen wird;
- Mittel zum Vergleich (603) der Audioaufzeichnung mit einer vorbestimmten Signatur einer Schussauslösung mit dem Gewehr; und
- Mittel zur Übertragung (607), an die Kontrollstation über die Anschlussschnittstelle, wenn sich die Audioaufzeichnung mit der vorbestimmten Signatur deckt, eines Schussauslösungs-Detektionssignals, das Trägheitsmessungen, die von der ersten Trägheitsmesseinheit bereitgestellt werden, und einer ersten Justierungseinstellung, die von der Driftkorrektur-Einstellvorrichtung bereitgestellt wird, zugeordnet ist, um es der Kontrollstation zu gestatten, eine Schussbahn in der virtuellen Umgebung zu bestimmen.

2. Schusssimulationsfernrohr nach Anspruch 1, das ferner eine Kugelabfallkorrektur-Einstellvorrichtung (27) aufweist und so beschaffen ist, dass das Schussauslösungs-Detektionssignal ferner einer zweiten Justierungseinstellung zugeordnet ist, die von der Kugelabfallkorrektur-Einstellvorrichtung bereitgestellt wird, um es der Kontrollstation zu gestatten, sie zu berücksichtigen, um die Schussbahn in der virtuellen Umgebung zu bestimmen.

3. Schusssimulationsfernrohr nach einem der Ansprüche 1 und 2, wobei das elektronische System Mittel zur Vornahme (401) einer Audioaufzeichnung einer Leerschussauslösung, die mit dem Gewehr durchgeführt wird, und Mittel zur Definition (403) der Signatur anhand der Audioaufzeichnung der Leerschussauslösung aufweist.

4. Schusssimulationsfernrohr nach einem der Ansprüche 1 bis 3, wobei das elektronische System Mittel zur Vornahme (602) einer Frequenztransposition der Audioaufzeichnung aufweist, und wobei die vorbestimmte Signatur eine Spektralsignatur ist.

5. Schusssimulationsfernrohr nach einem der Ansprüche 1 bis 4, ferner aufweisend eine zweite Trägheitsmesseinheit, und wobei das elektronische System Mittel zur Verfeinerung der Trägheitsmessungen, die von der ersten Trägheitsmesseinheit bereitgestellt werden, mithilfe von Trägheitsmessungen, die von der zweiten Trägheitsmesseinheit bereitgestellt werden, aufweist, wobei die erste Trägheitsmesseinheit im Datenzusammenführungsmodus und die zweite Trägheitsmesseinheit im Rohdatenmodus konfiguriert ist.

6. Simulationssystem mit mindestens einer Kontrollstation und mindestens einem Schusssimulationsfernrohr (12) nach einem der Ansprüche 1 bis 5, wobei jedes Schusssimulationsfernrohr an eine der Kontrollstationen (13) angeschlossen ist, wobei jede Kontrollstation Mittel aufweist, um die Schussbahn in der virtuellen Umgebung zu bestimmen (722), wenn die Kontrollstation das Schussauslösungs-Detektionssignal von einem Simulationsfernrohr empfängt, das an sie angeschlossen ist, aufweist.

7. Simulationssystem nach Anspruch 6, wobei jede Kontrollstation mindestens einen Satz Schießtabellen enthält, die in Abhängigkeit von einer Strecke, die eine simulierte Kugel zurücklegt, Schussabweichungsdaten bereitstellen, unter anderem in Abhängigkeit von der Kraft und Richtung des Windes, und wobei die Mittel zur Bestimmung der Schussbahn in der virtuellen Umgebung Folgendes aufweisen:
- Mittel zur Bestimmung einer Position des Soldaten in der Simulation in der virtuellen Umgebung zum Zeitpunkt der Schussauslösung;
- Mittel zur Bestimmung der Zielachse des Gewehrs mithilfe der Trägheitsmessungen, die dem Schussauslösungs-Detektionssignal zugeordnet sind;
- Mittel zur seitlichen Korrektur der Zielachse des Gewehrs durch die erste Justierungseinstellung; und
- Mittel zur Anwendung der Abweichungsdaten, die im Satz Schießtabellen angegeben sind.

8. Simulationssystem nach Anspruch 7, wobei jeder Satz Schießtabellen in Abhängigkeit von einer Strecke, die von einer simulierten Kugel zurückgelegt wird, Kugelabfalldaten bereitstellt, wobei das Simulationsfernrohr eine Kugelabfallkorrektur-Einstellvorrichtung (27) aufweist, wobei das Schussauslösungs-Detektionssignal ferner einer zweiten Justierungseinstellung zugeordnet ist, die von der Kugelabfallkorrektur-Einstellvorrichtung bereitgestellt wird, wobei die Mittel zur Bestimmung der Schussbahn in der virtuellen Umgebung ferner Mittel zur Korrektur der Zielachse des Gewehrs in der Höhe durch die zweite Justierungseinstellung aufweisen.

9. Simulationssystem nach Anspruch 8, wobei jeder Satz Schießtabellen in Abhängigkeit von einer Strecke, die von einer simulierten Kugel zurückgelegt wird, Kugelabfalldaten in Abhängigkeit von einer Umgebungstemperatur und einem Atmosphärendruck in der simulierten Umgebung bereitstellt.

10. Simulationssystem nach einem der Ansprüche 7 bis 9, wobei die Position des Soldaten in der Simulation in der simulierten Umgebung durch Anwendung eines vorgegebenen Versatzes im Verhältnis zu einem Avatar eines Beobachters festgelegt ist, der den Soldaten in der Simulation in der virtuellen Umgebung begleitet.

11. Verfahren, das von einem Schusssimulationsfernrohr (12) implementiert wird, das an ein Gewehr (11) angebracht ist und das eine erste Trägheitsmesseinheit (314), eine Driftkorrektur-Einstellvorrichtung (25), ein elektronisches System (300), ein Mikrofon (22), eine Anzeigeeinrichtung (21) und eine Schnittstelle (28) zum Anschluss an eine Kontrollstation (13) aufweist, wobei das Verfahren so ausgelegt ist, dass es die folgenden Schritte vornimmt:
- Empfangen (505), über die Anschlussschnittstelle, der Videodaten, die für ein Sichtfeld durch ein simuliertes Fernrohr in der virtuellen Umgebung repräsentativ sind;
- Anzeigen (507) der empfangenen Videodaten auf der Anzeigeeinrichtung;
- Erhalten (601) einer Audioaufzeichnung, die in Echtzeit durch das Mikrofon vorgenommen wird;
- Vergleichen (603) der Audioaufzeichnung mit einer vorbestimmten Signatur einer Schussauslösung mit dem Gewehr; und
- Übertragen (607), an die Kontrollstation über die Anschlussschnittstelle, wenn sich die Audioaufzeichnung mit der vorbestimmten Signatur deckt, eines Schussauslösungs-Detektionssignals, das Trägheitsmessungen, die von der Trägheitsmesseinheit bereitgestellt werden, und einer Justierungseinstellung, die von der Driftkorrektur-Einstellvorrichtung bereitgestellt wird, zugeordnet ist, um es der Kontrollstation zu gestatten, eine Schussbahn in der virtuellen Umgebung zu bestimmen.

12. Verfahren, das von einem Simulationssystem implementiert wird, das mindestens eine Kontrollstation (13) und mindestens ein Schusssimulationsfernrohr (12), das das Verfahren nach Anspruch 11 implementiert, aufweist, wobei jedes Schusssimulationsfernrohr an eine der Kontrollstationen angeschlossen ist, wobei das Verfahren so ausgelegt ist, dass jede Kontrollstation die Schussbahn in der virtuellen Umgebung bestimmt (722), wenn die Kontrollstation das Schussauslösungs-Detektionssignal von einem der Simulationsfernrohre empfängt, das an sie angeschlossen ist.

13. Computerprogrammprodukt, **dadurch gekennzeichnet, dass** es Anweisungen umfasst, um das Verfahren nach Anspruch 11 zu implementieren, wenn das Programm von einem Prozessor (310) ausgeführt wird.

14. Informationsspeichermedium, **dadurch gekennzeichnet, dass** es ein Computerprogramm speichert, das Anweisungen umfasst, um das Verfahren nach Anspruch 11 zu implementieren, wenn das Programm von einem Prozessor (310) ausgeführt wird.

## Claims

1. Firing-simulation scope (12) intended to be installed on a rifle (11), including a first inertial measurement unit (314), a windage correction adjustment device (25), an electronic system (300), a microphone (22), a display (21) and a connection interface (28) for connection to a control station (13), the firing-simulation scope being such that the electronic system includes:
- means for receiving (505), via the connection interface, video data representing a field of view, through a simulated scope, in the virtual environment;
- means for displaying (507) on the display the received video data;
- means for obtaining (601) an audio recording made in real time by the microphone;
- means for comparing (603) the audio recording with a predetermined firing-triggering signature with the rifle; and
- means for transmitting (607), to the control station via the connection interface, when the audio recording matches the predetermined signature, a firing triggering detection signal associated with inertial measurements supplied by the first inertial measurement unit and with a first adjustment setting supplied by the windage correction adjustment device, so as to enable the control station to determine a firing trajectory in the virtual environment.

2. Firing-simulation scope according to claim 1, further including a device (27) for adjusting correction of the bullet drop, and such that the firing triggering detection signal is further associated with a second adjustment setting supplied by the bullet drop correction adjustment device, so as to enable the control station to take account thereof for determining the firing trajectory in the virtual environment.

3. Firing-simulation scope according to one of claims land 2, wherein the electronic system includes means for making (401) an audio recording of a dry-firing triggering with the rifle and means for defining (403) the signature from the audio recording of the dry-firing triggering.

4. Firing-simulation scope according to any one of claims 1 to 3, wherein the electronic system includes means for making (602) a frequency transposition of the audio recording, and wherein the predetermined signature is a spectral signature.

5. Firing-simulation scope according to any one of claims 1 to 4, further including a second inertial measurement unit, and wherein the electronic system includes means for refining the inertial measurements supplied by the first inertial measurement unit by virtue of inertial measurements supplied by the second inertial measurement unit, the first inertial measurement unit being configured in data fusion mode and the second inertial measurement unit being configured in raw data mode.

6. Simulation system including at least one control station and at least one firing-simulation scope (12) according to any one of claims 1 to 5, each simulation scope being connected to one said control station (13), each control station including means for determining (722) the firing trajectory in the virtual environment, when said control station receives the firing triggering detection signal from one said simulation scope that is connected thereto.

7. Simulation system according to claim 6, wherein each control station includes at least one set of firing tables providing, according to a distance travelled by a simulated bullet, firing deviation data according further to wind force and direction, and wherein the means for determining the firing trajectory in the virtual environment include:
- means for determining a position of the soldier in simulation in the virtual environment at the moment of the triggering of firing;
- means for determining the axis of sight of the rifle by virtue of the inertial measurements associated with the firing triggering detection signal;
- means for laterally correcting the axis of sight of the rifle by the first adjustment setting; and
- means for applying the deviation data specified in the set of firing tables.

8. Simulation system according to claim 7, wherein each set of firing tables supplies, according to a distance travelled by a simulated bullet, bullet-drop data, wherein the simulation scope comprises a bullet-drop correction adjustment device (27), wherein the firing triggering detection signal is further associated with a second adjustment setting supplied by the bullet-drop correction adjustment device, wherein the means for determining the firing trajectory in the virtual environment further include means for correcting the axis of sight of the rifle for elevation by way of the second adjustment setting.

9. Simulation system according to claim 8, wherein each set of firing tables supplies, according to a distance travelled by a simulated bullet, bullet-drop data according to an ambient temperature and an atmospheric pressure in the simulated environment.

10. Simulation system according to any one of claims 7 to 9, wherein the position of the soldier in simulation in the virtual environment is fixed by applying a predefined offset with respect to an avatar of an observer accompanying the simulated soldier in the virtual environment.

11. Method implemented by a firing-simulation scope (12) that is installed on a rifle (11) and includes an inertial measurement unit (314), a device (25) for adjusting windage correction, an electronic system (300), a microphone (22), a display (21) and a connection interface (28) for connection to a control station (13), the method being such that the electronic system performs the following steps:
- receiving (505), via the connection interface, video data representing a field of view, through a simulated scope, in the virtual environment;
- displaying (507) on the display the received video data;
- obtaining (601) an audio recording made in real time by the microphone;
- comparing (603) the audio recording with a predetermined signature of firing triggering with the rifle; and
- transmitting (607) to the control station via the connection interface, when the audio recording matches the predetermined signature, a firing triggering detection signal associated with inertial measurements supplied by the inertial measurement unit and with an adjustment setting supplied by the windage correction adjustment device, so as to enable the control station to determine a firing trajectory in the virtual environment.

12. Method implemented by a simulation system including at least one control station (13) and at least one firing-simulation scope (12) implementing the method according to claim 11, each simulation scope being connected to one said control station, the method being such that each control station determines (722) the firing trajectory in the virtual environment, when said control station receives the firing triggering detection signal from one said simulation scope that is connected thereto.

13. Computer program product, **characterised in that** it comprises instructions for implementing the method according to claim 11, when said program is executed by a processor (310).

14. Information storage medium, **characterised in that** it stores a computer program comprising instructions for implementing the method according to claim 11, when said program is executed by a processor (310).
